# EUROPEAN PATENT APPLICATION

(11) **EP 4 470 664 A1**
(43) Date of publication of application: **04.12.2024**
(21) Application number: 23746528.1
(22) Date of filing: 17.01.2023
(51) Int. Cl.: B01J 19/26, C02F 1/72

(54) **SOLAR PHOTO-FENTON REACTOR FOR DISINFECTING WATER AND SIMULTANEOUSLY ELIMINATING POLLUTANTS**

(30) Priority: 26.01.2022 ES 202230121 U
(71) Applicant: Universidad de Almería, 04120 la Cañada de San Urbano (ALMERÍA) (ES)
(72) Inventor: SÁNCHEZ PÉREZ, Jose Antonio, 04120 La Cañada de San Urbano, Almería (ES); CASAS LÓPEZ, José Luis, 04120 La Cañada de San Urbano, Almería (ES); GARCÍA SÁNCHEZ, Jose Luis, 04120 La Cañada de San Urbano, Almería (ES); SORIANO MOLINA, Paula, 04120 La Cañada de San Urbano, Almería (ES); AGÜERA LÓPEZ, Ana María, 04120 La Cañada de San Urbano, Almería (ES)
(74) Representative: Pons
(86) International application number: PCT/ES2023/070023
(87) International publication number: WO 2023/144431

(57) **Abstract**

The invention relates to a photo-Fenton reactor for disinfecting water and simultaneously eliminating pollutants, which comprises a container with curved ends, which is divided into two channels (16) by a central partition (15), with deflectors (14) on the curves, wherein the liquid is set in motion and mixed by a paddle wheel (11).

## Description

### TECHNICAL SECTOR

Regeneration of treated water, disinfection of irrigation water, elimination of emerging pollutants in aqueous effluents.

### BACKGROUND OF THE INVENTION

Water shortage is a growing problem in Spain, aggravated by the impacts of climate change. Among the solutions to this problem, urban wastewater regeneration can play a key role as a non-conventional water source intended for agricultural irrigation. New advances in solar radiation-based treatments promote their application for wastewater regeneration. Among them, the solar photo-fenton process has proven effective for disinfecting wastewater and eliminating micropollutants, due to the large amount of hydroxyl radicals (HO•) generated by means of the catalytic cycling of iron ions (Fe2+ and Fe3+) activated by UV-vis radiation and their reaction with hydrogen peroxide (H₂O₂). It is considered a treatment with great potential due to the abundance of iron in nature and its low toxicity, and that H₂O₂ is also easy to handle and environmentally safe. The fundamentals of the photo-fenton process have been extensively studied and there are numerous publications to that end. The authors of this utility model are pioneers in the use of continuous flow photoreactors for disinfecting urban wastewater and eliminating micropollutants by means of solar photo-fenton, a subject the technological transfer thereof to the water industry is still pending. The studies published to date have been carried out on a laboratory or small pilot plant scale, without reaching a demonstrative scale, so there are many engineering and design problems still to be solved. The following can be mentioned among the most recent literature on continuous flow wastewater treatment:
P. Soriano Molina, J. L. Garcia Sánchez, S. Malato, P. Plaza-Bolaños, A. Agüera, J. A. Sánchez Pérez. On the design and operation of solar photo-Fenton open reactors for the removal of contaminants of emerging concern from WWTP effluents at neutral pH. Applied Catalysis B: Environmental. 256,117801 (2019).
I. De la Obra, B. Esteban Garcia, G. Rivas, J. L. Casas López, J. A. Sánchez Pérez. Continuous flow disinfection of WWTP secondary effluents by solar photo-Fenton at neutral pH in raceway pond reactors at pilot plant scale. Applied Catalysis B: Environmental 247: 115-123 (2019).
J. A. Sánchez Pérez, S. Arzate, P. Soriano Molina, J. L. Garcia Sánchez, J. L. Casas López, P. Plaza-Bolaños. Neutral or acidic pH for the removal of contaminants of emerging concern in wastewater by solar photo-Fenton? A techno-economic assessment of continuous raceway pond reactors. Science of the Total Environment 736: 139681 (2020).
P. Soriano Molina, S. Miralles, B. Esteban, P. Plaza-Bolaños, J. A. Sánchez Pérez. Two strategies of solar photo-Fenton at neutral pH for the simultaneous disinfection and removal of contaminants of emerging concern. Comparative assessment in raceway pond reactors. Catalysis Today 361: 17-23 (2021).

### DESCRIPTION OF THE INVENTION

Water is treated in open channel reactors with "raceway pond reactor" (RPR) type recirculation, through which the water is recirculated by means of a paddle wheel, with direct incidence of solar radiation. Iron salts and hydrogen peroxide are added in small amounts that are, however, sufficient to disinfect and eliminate organic micropollutants. The novelty lies in the design of the specific solar photo-fenton reactor and in the control of the operation in order to achieve the treatment objective. The invention consists of a photoreactor, specifying the length/width ratio, surface area, water depth, points of addition of the water to be treated and reagents, drainpipe and treated water outlet, equipped with a monitoring and control system for adjusting the flow rates of reagents and water to be treated, water depth, and the residence time in order to achieve the desired quality of the resulting water, taking solar radiation and temperature as input parameters.

These reactors are built with low-cost materials, and the liquid depth can be easily varied in order to change the length of the light path. Their operation in continuous flow mode allows significantly increasing the flow rate of treated wastewater per unit surface area of the reactor.

The operation of RPRs for solar photo-fenton at acidic pH (2.8) showed the suitability of this process for the elimination of organic micropollutants in real WWTP secondary effluents with mild oxidising conditions (0.1 mM Fe2+ and 0.88 mM H₂O₂) in a 5 cm deep RPR operated in continuous mode at 40 min hydraulic residence time (HRT). The organic micropollutant elimination rate was 84%. With respect to the continuous flow operation at neutral pH for the joint elimination of bacteria and organic micropollutants, more than 80% of the organic micropollutant load was eliminated with 0.1 mM Fe3+-EDDS complex as iron source and 0.88 mM H₂O₂. EDDS (ethylenediamine-N,N'-disuccinic acid) is an iron complexing agent used to keep iron in solution at neutral pH, despite being very expensive. Therefore, there is a need for cheaper iron complexing agents, such as NTA (nitrile triacetate) which forms the Fe3+-NTA complex also used for solar photo-fenton.

In terms of the geometrical design of the RPR, it is based on the design developed for the mass culture of microalgae, although the characteristic reaction times are very different in both processes: days for microalgae and minutes for photo-fenton. These differences result in different requirements for mixing and reactor geometry. Mixing in large-scale RPR designed for culturing microalgae is deficient, whereas intense mixing is required for the faster photo-fenton process.

It should be mentioned that the liquid depth in the solar photoreactor is set by means of an adjustable overflow. Said photoreactor has feed pumps for feeding water to be treated, Fe reagent, and H₂O₂, and an effluent pump which drives the water through a sand filter prior to the treated water storage tank.

Moreover, the solar photoreactor has a central drainpipe arranged transversely with respect to the width of the container to facilitate cleaning and the purging of solids.

In summary, with respect to novelty, this utility model applies new engineering developments to achieve suitable mixing in a continuous flow RPR for disinfecting wastewater with simultaneous elimination of organic micropollutants by solar photo-fenton. This is a development pending technological transfer to the water treatment industry that has not been previously addressed. To the knowledge of the present applicant, there are no patents or utility models in this field. Unlike the raceway-type reactors used for culturing microalgae, in which the minimum length must be 10 times the width of the reactor and the flow is a laminar flow, in this utility model the length of the channel is at most 3 times the width and the paddle wheels generate a turbulent regime. The height of the channel allows operating with liquid depths between 5 and 25 cm. The invention has adjustable pumps for the inflow and outflow of water to be treated, reagent metering pumps (source of Fe and hydrogen peroxide), UVA irradiance, temperature, and redox potential meter, with operation monitoring and control. It allows adjusting the hydraulic residence time and the metering of reagents based on the incident solar radiation and on the temperature of the water.

### BRIEF DESCRIPTION OF THE FIGURES

To complement the description that is being made and for the purpose of helping to better understand the features of the invention, a set of figures is attached as an integral part of said description wherein the following has been depicted with an illustrative and non-limiting character:

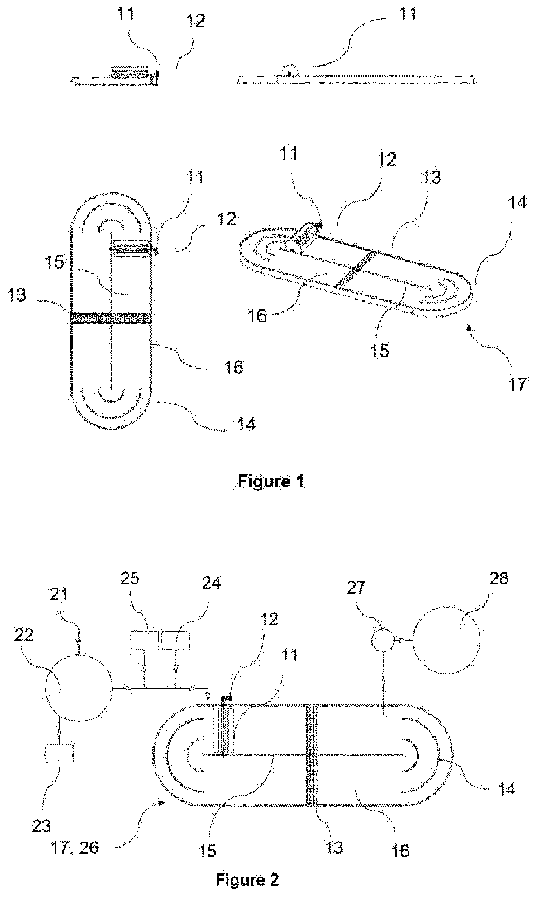

Figure 1 depicts the sizing of the reactor in terms of total height with the paddle wheel installed (0.98 m), the height of the container wall (0.35 m), the width-to-length ratio of the container, and a diagram of the reactor and the arrangement of its main elements: curved ends divided into two channels (16) by a central partition (15), with deflectors (14) on the curves, wherein the liquid is set in motion and mixed by a paddle wheel (11) driven by a motor (12) and having a central drainpipe (13) on both channels of the reactor (17).
Figure 2 shows a flow diagram of the process with the streams of water to be treated (21), conditioning tank (22), tanks with reagents: sulphuric acid (23), iron solution (24), and hydrogen peroxide (25); photoreactor (26), outflow stream to the calcite or sand filter (27) and treated water storage tank (28).

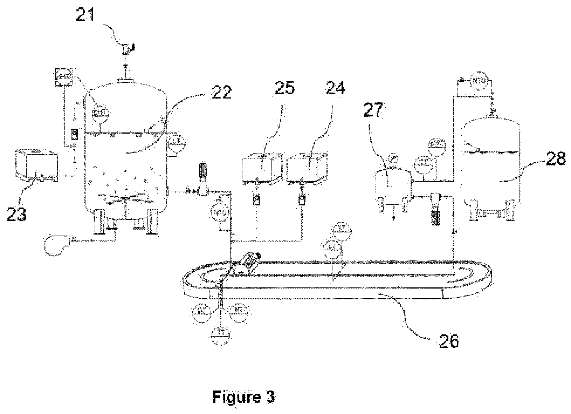

Figure 3 illustrates the P&I diagram of the solar photo-fenton water treatment process. The meaning of the instrumentation symbols is shown below:

| | |
|---|---|
| 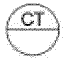 | Condutivity probe/Transmitter |
| 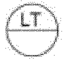 | Level sensor/Transmitter |
| 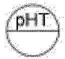 | pH probe/Transmitter |
| 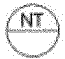 | Radiometer/Transmitter |
| 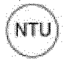 | Turbidimeter/Transmitter |
| 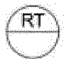 | Redox probe/Transmitter |
| 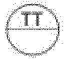 | Temperature probe/Transmitter |
| 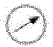 | Manometer |

### PREFERRED EMBODIMENT OF THE INVENTION

As shown in Figure 3, water from secondary treatment is directed to a pretreatment tank in which it will be adjusted so that it complies with the conditions required for the proper functioning of the process: addition of sulphuric acid (23) for adjusting the pH close to 2.8 (process at acidic pH), or for lowering the bicarbonate content (process at neutral pH). Mixing will be performed in the tank by aeration by means of a blower that furthermore favours the desorption of carbon dioxide resulting from the protonation and subsequent disassociation of bicarbonates.

Pretreated water is pumped to the RPR. Reagents (solution containing iron salt and hydrogen peroxide, respectively) will be metered into the tubing for feeding the reactor (17), in order to favour the mixing of the water to be treated (21) and the reagents by means of a static mixer located in the tubing prior to entry into the photoreactor (26).

The flow rates of the reagent metering pumps will be adjusted based on selected operating conditions as a result of the characteristics of the water to be treated (21), the level of UV radiation, and the temperature of the water.

The outflow water from the reactor (17) is directed to a sand filter to remove, from the water, iron precipitated during treatment (process at neutral pH) or to a calcium carbonate bed that will act as a neutralising agent and a filtering bed, removing part of the precipitated iron (process at acidic pH).

### List of references:

- 11: paddle wheel
- 12: motor
- 13: drainpipe
- 14: deflector
- 15: central partition
- 16: channel
- 17: reactor
- 21: water to be treated
- 22: conditioning tank
- 23: sulphuric acid
- 24: iron solution
- 25: hydrogen peroxide
- 26: photoreactor
- 27: calcite or sand filter
- 28: treated water storage tank

## Claims

1. A solar photoreactor for disinfecting water and simultaneously eliminating pollutants by means of the solar photo-fenton process, which comprises a container with curved ends, which is divided into two channels (16) by a central partition (15), with deflectors (14) on the curves, wherein the liquid is set in motion and mixed by a paddle wheel (11).

2. The solar photoreactor according to claim 1, **characterised in that** the liquid depth is set by means of an adjustable overflow, the photoreactor (26) having feed pumps for feeding water to be treated (21), Fe reagent, and H₂O₂, and an effluent pump which drives the water through a sand filter prior to the treated water storage tank.

3. The solar photoreactor according to claims 1 and 2, **characterised by** having a central drainpipe (13) arranged transversely with respect to the width of the container to facilitate cleaning and the purging of solids.
